Europäisches Patentamt

European Patent Office

Office européen des brevets

(11) Publication number: **0 335 486 B1**

# EUROPEAN PATENT SPECIFICATION

(45) Date of publication of patent specification: **15.06.94**　(51) Int. Cl.[5]: **G11B 7/00**

(21) Application number: **89301389.6**

(22) Date of filing: **14.02.89**

(54) **Optical information recording method.**

(30) Priority: **28.03.88 JP 73610/88**
**31.03.88 JP 80839/88**

(43) Date of publication of application:
**04.10.89 Bulletin 89/40**

(45) Publication of the grant of the patent:
**15.06.94 Bulletin 94/24**

(84) Designated Contracting States:
**DE FR GB NL**

(56) References cited:
**EP-A- 0 218 243**
**EP-A- 0 265 971**

**Proceedings of SPIE: Optical Storage Technology and Applications vol. 899, 15 January 1988, Los Angeles, California pages 188 - 195; Akahira et al.: "Recent Advances In Erasable Phase Change Optical Disks"**

(73) Proprietor: **MATSUSHITA ELECTRIC INDUSTRI-AL CO., LTD.**
**1006, Oaza Kadoma**
**Kadoma-shi, Osaka-fu, 571(JP)**

(72) Inventor: **Nishiuchi, Kenichi**
**2-134-508, Okubo-cho**
**Moriguchi-shi Osaka-fu 570(JP)**
Inventor: **Yamada, Noboru**
**1-4-2 Kuzuhaoka**
**Hirakata-shi Osaka-fu 573(JP)**

(74) Representative: **Crawford, Andrew Birkby et al**
**A.A. THORNTON & CO.**
**Northumberland House**
**303-306 High Holborn**
**London WC1V 7LE (GB)**

## Description

This invention relates to a method of recording an information signal on an optical information recording medium by irradiating high density energy flux thereon.

Technology that an information signal is recorded and reproduced by using a laser beam is well known and there is an increasingly active trend to use it for document and data filing applications recently. In addition, examples of the research and development on the rewritable recording systems having a erasing function have been reported. Out of them, a phase difference type optical disk is one method available in which the state change either between an amorphous state and a crystal state or between two different crystal states is used. Thin recording film to be used in this method features that either an amorphous state or a crystal state is formed in accordance with temperature rising and cooling conditions when a laser beam is irradiated and that these states are changeable reversibly.

The amorphous state and the crystal state are different from each other in the complex ideas of refraction, which can be expressed by refractive index n and extinction coefficient k, and the signal recording is achieved using thus generated difference in transmittance and reflectance of a recording medium. In order to realize this, when referred to, for example, SPIE's 30th Annual International Technical Symposium on Optical and Engineering, Conference 695: Optical Mass Data Storage 2,695-17, Aug., 1986, a method has been proposed in which a laser beam modulated between two power levels of writing power Pw and erasing power Pe (Pw > Pe) is irradiated on a recording medium. When a laser beam with its strength modulated according to a signal to be recorded is radiated on the recording medium, a portion where the writing power Pw was irradiated becomes an amorphous state and a portion where the erasing power Pe was irradiated becomes a crystal state no matter whether the state of an area to be irradiated thereon had been the amorphous or crystal state before irradiation. As a result, writing and erasing are simultaneously carried out with a single laser beam, which means that an overwrite is carried out.

In the above, we described the change in state between the amorphous state and crystal state, but when the change in state is between two different crystal states, the same result as above can be obtained by corresponding the above-mentioned amorphous state to a second crystal state.

As described above, writing on an optical disk is possible by irradiating a laser beam which has been modulated between two power levels. However, if a signal is reproduced after the overwrite has been repeatedly carried out, a component of the previous signal is superimposed upon the read signal due to incomplete erasers. Such superimposed signal would cause an error when the read signal is demodulated thereafter.

In additon, through detailed observation of the shape of a recording mark formed by the above-mentioned method, it was found that the mark thus formed is not symmetrical in shape at the beginning point and finishing point of writing and the read signal has a waveform distortion corresponding to the asymmetrical shape of the mark.

For this reason, when such a recording method that requires to closely determine both the rise position and the fall position of a reproduced signal waveform such as, for example, the pulse width modulation (PWM) method is to be introduced in order to improve the recording density of an optical dish, the above-mentioned conventional recording method cannot be used.

In the Proceedings of SPIE:Optical Storage Technology and Applications, vol.899, 15.1.1988, pages 188-195 studies of phase-change type erasable optical disks are reviewed. Two types of disk systems are described, the first being an inherent overwrite system the second being a simultaneous read/erase system using two laser beams. In a static overwrite cycle test the laser power was modulated between a peak level for amorphization of disk material and a bias level for crystallisation.

European patent applications EP-A-0265971 and EP-A-0218243 also describe phase-change type erasable optical disks. In the system of EP-A-0265971 the laser power is modulated to have three energy levels, a recording (high) power level, an erasing (medium) power level and a cooling (low) power level. In the system of EP-A-0218243 after recording of new data the light intensity of the erasing light beam is gradually decreased and turned off.

A first object of this invention is to provide a method of realizing a high erasability when a signal is to be overwritten on a recording medium using a single laser beam.

A second object of this invention is to provide a recording method which makes it possible to provide a reproduced signal with less waveform distortion.

In one aspect, the present invention provides a method of recording an information signal by using a single light beam on a recording medium which is reversibly changeable between first and second states which are optically distinguishable from each other, said method having a step of applying the light beam, as a recording light pulse, in response to the information signal to the recording medium for a predetermined duration to cause the recording medium to melt and become the first state thereby forming a record mark,

characterized by modifying the light beam before and after the recording light pulse into a train of auxiliary light pulses each having a shorter duration than the predetermined duration and applying the train of auxiliary pulses to an area of the recording medium before and after the record mark to cause the area to melt and become a state substantially identical to the second state.

The light beam applied to the area between the record marks may preferably consist of a train of auxiliary light pulses each having a pulse width smaller enough than the predetermined duration of the writing laser beam. However, the modification of the light beam may be such that the peak power level is reduced. It is the only requirement for the light beam applied to the area between the record marks to have an energy which does not cause the recording medium to change its state to the first state.

In another aspect, the present invention provides a method of recording an information signal by using a single light beam on a recording medium which is reversibly changeable between two states which are optically distinguishable from each other, said method having a step of applying the light beam, as a recording light pulse, in response to the information signal to the recording medium for a predetermined duration to cause the recording medium to melt and cause a state change from one of the two states to the other thereby forming a record mark,

characterized by modulating the recording light pulse into a plurality of light pulses so as to have a higher energy at the beginning of the predetermined duration than an energy at the ending of the predetermined duration thereby causing the recording medium to melt uniformly at an area applied with the recording light pulse and cause the state change from one of the two states to the other to form said area into a record mark having substantially a symmetrical shape.

The above and other objects, features and advantages of the invention will be more apparent from the following detailed description taken in connection with the accompanying drawings in which:

Fig. 1 is a fundamental diagram showing a modulated waveform of a laser beam and a written state forming thereby according to a embodiment of this invention;

Fig. 2 is a block diagram of an optical recording system in accordance with this invention;

Fig. 3 is a conceptional diagram showing a modulated waveform of a laser beam and a written state formed thereby in accordance with the prior art;

Fig. 4 is a block diagram showing an example of a laser driving circuit of this invention;

Fig. 5 shows a gate circuit in a first embodiment of this invention;

Fig. 6 is a timing chart of the gate circuit shown in Fig. 5;

Fig. 7 is a waveform diagram of a modulated waveform of a laser beam;

Fig. 8 is a characteristic diagram showing a relationship between the pulse width of an auxiliary pulse and the erasability;

Fig. 9 is a characteristic diagram showing a relationship between the pitch of a recording mark and the reproduced signal;

Figs. 10 (a) and (b) are one model which was used for calculating the temperature change when a beam was irradiated using the conventional overwriting method or recording method and a characteristic diagram obtained based on the calculated result, respectively;

Fig. 11 shows the shape of a recording mark formed when a beam was irradiated using a method of the prior art;

Fig. 12 is a waveform diagram showing a modulated waveform of a laser beam in a second embodiment of this invention;

Fig. 13 shows a gate circuit in the second embodiment;

Fig. 14 is a timing chart of the gate circuit shown in Fig. 13;

Fig. 15 is a diagram showing a temperature change where irradiation was made when the modulation method of this invention was applied;

Fig. 16 shows a shape of a recording mark according to this invention; and

Fig. 17 is a waveform diagram showing a modulated waveform of a laser beam in a third embodiment of this invention.

This invention will be described in detail while referring to the drawings.

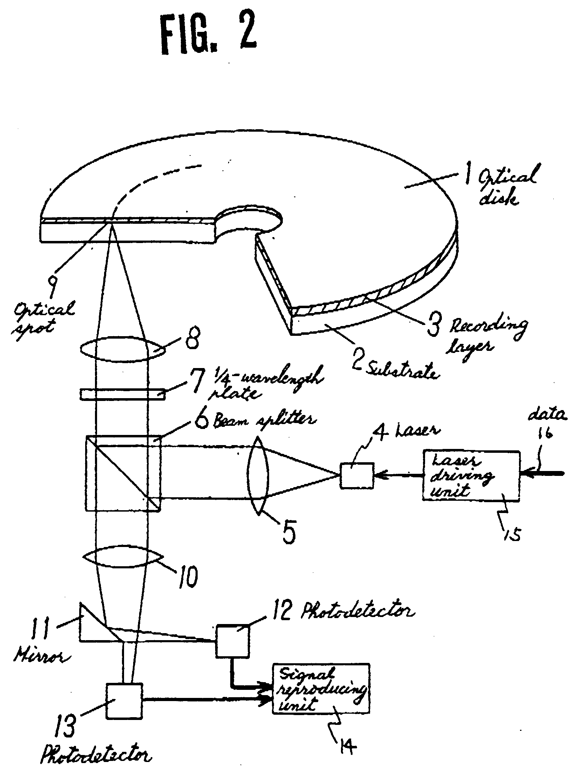

Fig. 2 shows an optical disk and an optical recording system in accordance with one embodiment of this invention.

Optical disc 1 is fundamentally made of a substrate 2 and a recording layer 3 disposed on the substrate 2. As the substrate 2, either resins such as, for example, polymethylmethacrylate (PMMA) and polycarbonate (PC), or glass can be used.

For the recording layer 3 on which a signal is recorded using a phase change by beam irradiation, GeTe, $GeSb_2Te_4$, $Ge2Sb_2Te_5$, InSe system, InSeTlCo system, GeSnTeAn system, SeSbTeSe system, SeSnTeO system, SeTeS system or the like can be used in case that the phase change is to be taken place between an amorphous state and a crystal state, and InSb system, AgZn system or the like can be used in case that the phase change is to be taken place between two crystal states.

Recording on the recording layer 3 (hereinafter used including the meaning of overwrite) is generally carried out by using, as a laser beam source, a semiconductor laser 4 with a wavelength of 780 nm. Light beam from the semiconductor laser 4 is made parallel by a collimator lens 5, reflected by a polarizing beam splitter 6, passed through a quarter wave length plate 7, and finally focused by an objective lens 8 to form a circular spot 9 of approximately 1 $\mu$m in diameter, which is a limit on wave length, on the recording layer 3 of the optical disk 1.

The light beam reflected by the recording layer 3 passes again through the objective lens 8, the quarter wave length plate 7, the polarizing beam splitter 6 and a lens 10 in this order. A part of the light beam thus reflected and passed therethrough is reflected by a mirror 11 to condense onto a photodetector 12 thereby being used for focus control in a signal reproducing circuit 14. The rest of the light beam is received by a photodetector 13 thereby to be used for tracking control and signal reproduction in the signal reproducing circuit 14.

In addition, the writing is carried out by modulating the power of the semiconductor laser 4 using a laser driving circuit 15 according to a data 16.

(EXAMPLE 1)

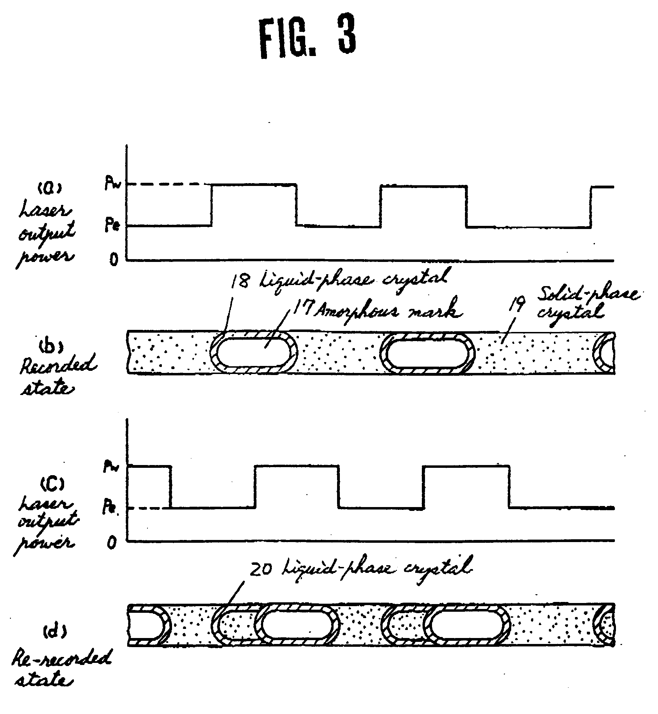

Writing was carried out on an optical disk 1 using a recording method of the prior art. Output of a laser beam used in this case and observations of how the writing was achieved using a transmission electron microscope are shown in Fig. 3. Figs. 3 (a) and (c) each shows the change of the output power level of a laser beam, in which, (a) is for the first time recording and (c) for the second time recording.

The output power level thereof changes between a writing power Pw and an erasing power Pe according to the input signal. Observation results of recorded areas are illustrated in Fig. 3 (b) and (d) corresponding to the beam irradiation as patterned in Figs. (a) and (c), respectively. Also, for the reason that no examination was given upon the shape of a recording mark, the mark is approximated to be symmetrical in shape.

In the first time recording (b), an amorphous mark 17 was formed where the writing power Pw was irradiated, and a large crystal grain 18 was observed surrounding the amorphous mark 17. Also, where the erasing power Pe was irradiated, a small crystal grain (microcrystal) 19 was observed.

In the second time recording (d), a large crystal grain 20, which had been developed in the first time recording, was observed within a small crystal grain obtained when the erasing power Pe was irradiated. From this result, it is considered that the large crystal grain 18 grown surrounding the amorphous mark 17 is a crystal which was produced during cooling from the melt state, and the small crystal grain 19 is a crystal which was precipitately formed from the solid phase state.

Here, the microcrystal which is precipitately crystalized from the solid phase state is defined as "solid-phase crystal", and the crystal which is formed in the cooling process from the melt state is defined as "melt-phase crystal".

These crystal states, having different grain sizes, produce different complex indexes of refraction. Therefore, as seen in Fig. 3 (d), if a melt-phase crystal 20 obtained in the first time recording exists out of the periphery of a newly recorded mark, a small amount of change in reflectance will be induced, resulting in a non-erased fraction of a component of the formerly recorded signal remained.

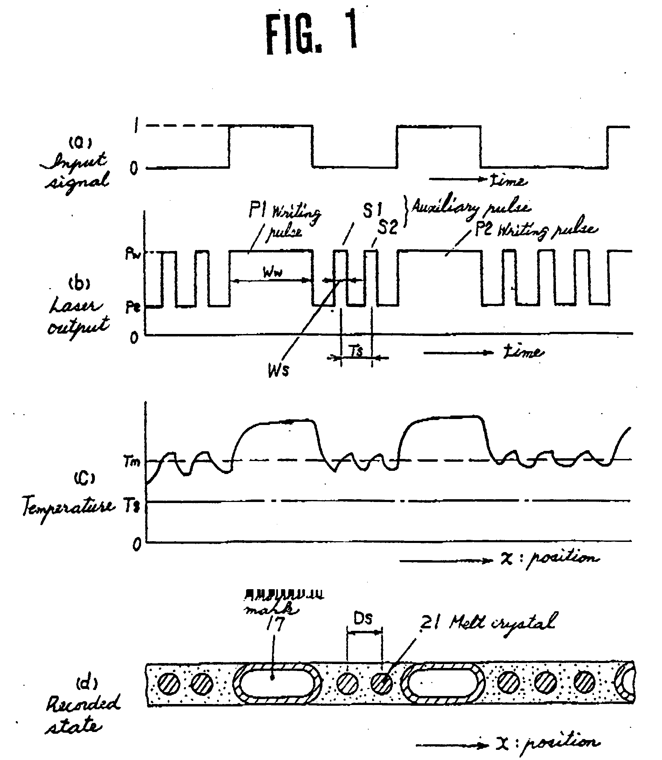

The recording method of an optical information according to this invention restricts the effect of the melt-phase crystal formed surrounding the recording mark as shown above. That is, in order to improve the erasability, an effective modulation is applied to the output waveform of a laser beam to be irradiated onto the optical disk 1. The modulation and its effect will be explained below by referring to Fig. 1. The waveform of a signal to be recorded on an optical disk is shown in Fig. 1 (a), and the waveform of an output beam from a semiconductor laser modulated in strength by the method of this invention is shown in Fig. 1 (b). Fig. 1 (c) shows the temperature change of the recording layer generated when the beam was irradiated. Fig. 1 (d) shows the transmission-type electron microscopic observations of the shape of the recorded mark formed actually on the recording layer.

The output waveform (b) of the semiconductor laser is composed of writing pulses ($P_1$ and $P_2$) which correspond to the level "1" of the code signal (a) and auxiliary pulses ($S_1$ and $S_2$) which occur between the writing pulses. Pulse width Ws of each auxiliary pulse is made such as to be smaller than the shortest pulse width of pulse widths Ww of the writing pulse.

If such a beam is irradiated on the recording layer, the temperature where irradiation was made is varied as shown in Fig. 1 (c). Namely, an area where the writing pulses $P_1$ and $P_2$ were irradiated is heated to a temperature exceeding the melting point Tm of a material of the recording layer, so that amorphous marks 17 each having a melt-phase crystal surrounding thereto are formed corresponding to the input signal.

Area where the auxiliary pulses S1 and S2, were irradiated also has the central portion raised in temperature thereby exceeding the Tm to melt.

However, because the irradiation time of the beam is short, the temperature rise is restricted to be smaller than that of the writing pulse irradiated area thereby to be cooled soon. As a result, since such a melt can not cause a cooling condition to make it amorphous, crystallization is taken place, to form a melt-phase crystal 20. In addition, the crystallizaiton is made in such a way that the central portion thereof accompanies with small amorphous areas. Therefore, almost all part of the area between the recorded marks are to be passed through the melt state. The area passed through the melt becomes the completely random state, so that the history of a previously written signal can be eliminated.

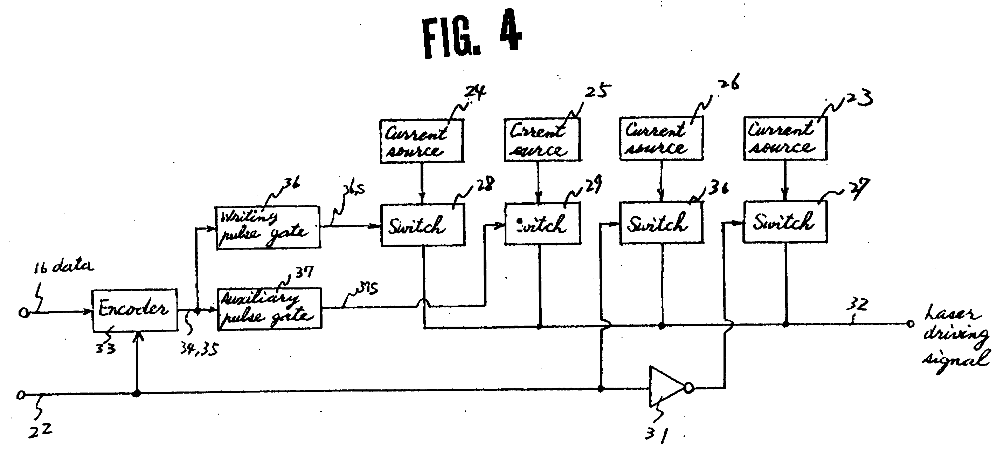

Fig. 4 shows a laser driving circuit for the recording method of this invention. This circuit comprises four kinds o current sources according to the modulation power level of the laser beam. Current sources 23, 24, 25 and 26 correspond to the reading power, peak power of the writing pulse, peak power of the auxiliary pulse and the erasing power, respectively. Each power level can be set to a desired value by varying the current of a corresponding current source. Each current source becomes a laser driving output through respective switching circuits 27, 28, 29 and 30.

In the reading made, since a writing gate signal 22 is turned "OFF", the switching circuit 27 only is turned "ON" by being inverted through an inverter 31, so that a current corresponding to the reading power is outputted as a laser driving output 32.

In the writing mode, the writing gate signal 22 is turned "ON", and the switching circuit 27 is turned "OFF", so that no flow of a reading current results. On the other hand, the switching circuit 30 is turned "ON", and a current corresponding to the erasing power Pe is outputted. In addition, a data 16 is coded by an encoder 33 output a code signal 34. This coding can be made in any modulation form, for example, FM code, MFM code, 2-7 code, 8-14 code or the like is general. Also, from the encoder 33, a clock signal 35 is simultaneously outputted together with the code signal 34. These signals thus outputted are passed through a writing pulse gate 36 and an auxiliary pulse gate 37 thereby to be outputted as a writing pulse gate signal 36 S and as an auxiliary pulse gate signal 37 S, respectively. These signals 36 S and 37 S are to switch the current source 24 for the writing pulse and the current source 25 for the auxiliary pulse, respectively. As a result, Combined current of the current source 24, 25 and 26 is outputted as the laser driving output 32.

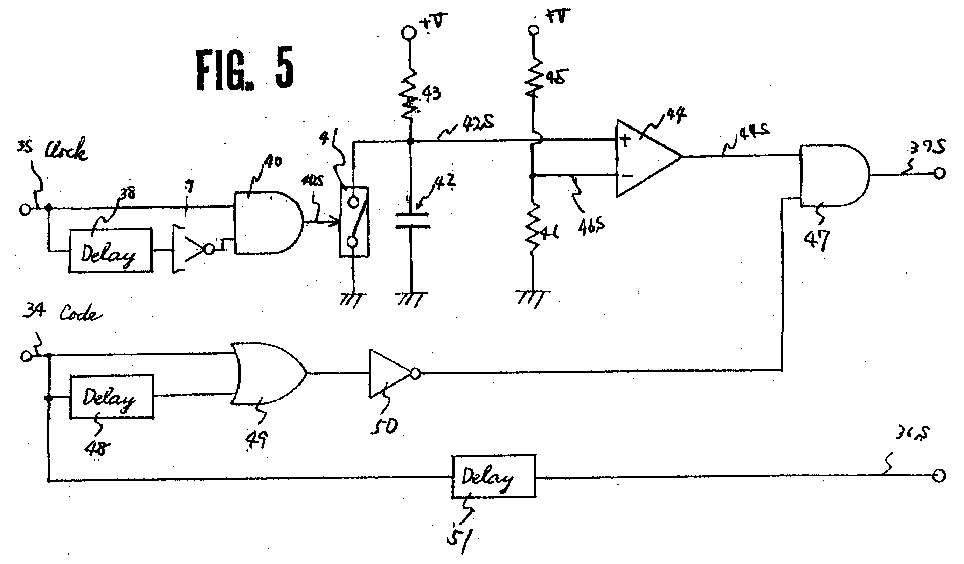

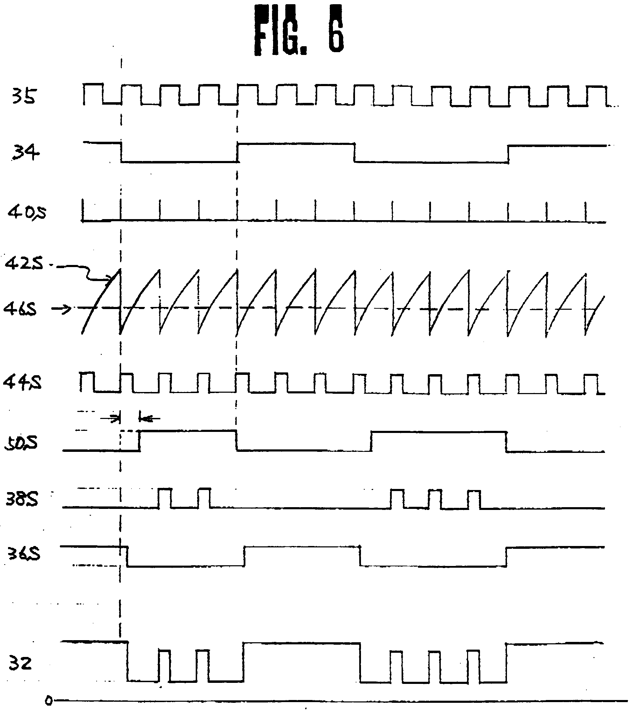

Here, a concrete example showing the writing pulse gage 36 and auxiliary pulse gate 37 is shown in Fig. 5 and their timing charts are shown in Fig. 6. As the input signal, the code signal 34 generated by the encoder 33 and a clock signal generated in the encoding process, particularly the clock signal 35 of higher order are used. The clock signal 35 becomes a leading edge signal 40 S of the clock by a delay element 38, an inverter 39 and an AND gate 40. Capacitor 42 is charged by a current which is supplied from a power source "+V" and passed through a resistor 43, and discharged by driving a switching circuit 41 by the clock signal 40 S, thus a signal 42 S being outputted. Comparator 44 compares a potential signal 46 S obtained by dividing a potential "+V" into a ratio of resistors 45 and 46 with the signal 42S thus outputted thereby to produce a signal 44 S. The signal 44 S is outputted to an AND gate 47. On the other hand, the code signal 34 becomes a signal 50 S for determining the time period during which the auxiliary pulse is generated by a delay element 48, an OR circuit 49 and an inverter 50 to be inputted to the AND gate 47. The auxiliary pulse gate signal 37S is outputted from the AND gate 47. Also, the code signal 34 becomes the writing gate pulse signal 36 S through a delay element 51.

As a result, in the recording mode, the switching circuits 28, 29 and 30 are operated by the writing gate signal 22, writing pulse gate signal 36 S and auxiliary pulse gate signal 37 S, respectively, to produce the laser driving signal 32.

Next, an example of this invention will be described in detail.

An optical disk 1, which comprises a substrate 2 of polycarbonate and a recording layer 3 of $Ge_2Sb_2Te_5$ which has thermal diffusion layers of $Zn\,S$ disposed on both sides thereof, was rotated at a linear velocity of 15 m/s thereby to carry out a writing. Writing and erasing characteristics were analyzed in such a way that, using two frequencies, 2.5 MHz and 2.14 MHz, a signal of 2.5 MHz was recorded first and C/N (carrier - to - noise ratio) value was measured, and then, a signal of 2.14 MHz was written and the C (carrier) component of the 2.5 MHz signal which had been written in advance was measured. The difference of the C component thus measured from the initial value was defined as erasability.

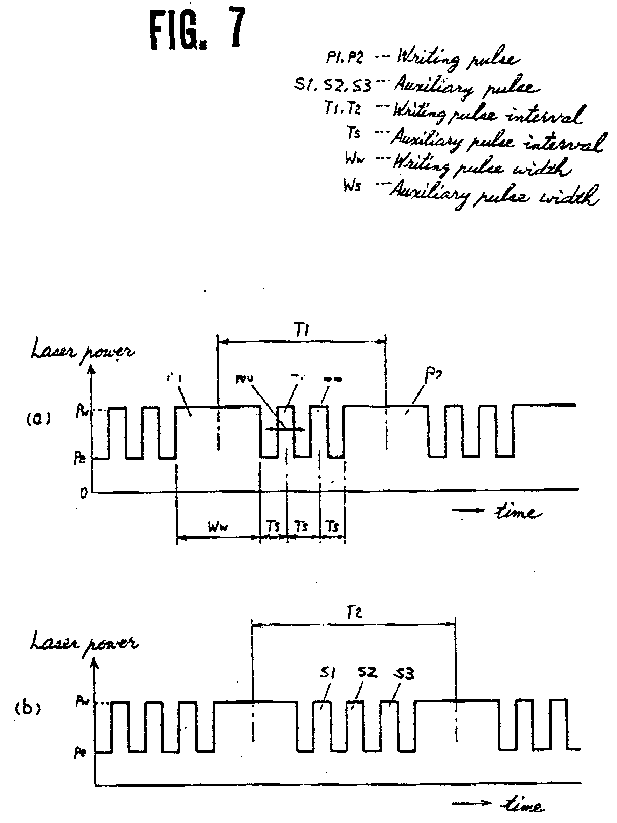

Modulated waveform of the laser beam used for writing will be explained in detail by referring to Fig. 7. Pulse width Ww of each of the writing pulses $P_1$ and $P_2$ for forming recording marks was 200 nS, and the periods $T_1$ and $T_2$ between the writing pulses $P_1$ and $P_2$ were 400 nS and 467 nS from the above-mentioned condition, respectively. In addition, auxiliary pulses $S_1$, $S_2$ and $S_3$ were arranged at equal intervals of Ts between the writing pulses (Ts = 67 nS). Also, the power of each pulse was such that the writing power level Pw was 16 mW, erasing power level Pe was 6 mW, and the peak power of the auxiliary pulse was identical to that of the writing power level.

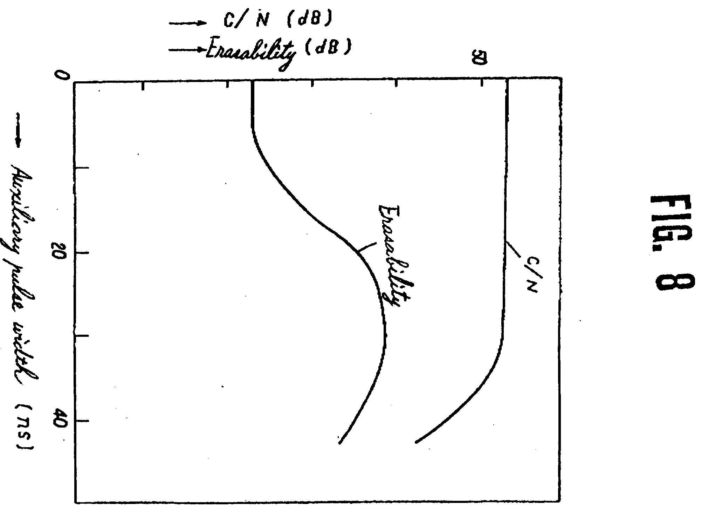

The results of the dependence of the auxiliary pulse on the pulse width and the erasability were shown in Fig. 8. The pulse width Ws of the auxiliary pulse can be set arbitrarily by changing either the capacity of the capacitor 42 or the value of the resistor 43 in Fig. 5.

The case that the pulse width Ws of the supplementary pulse is 0 nS corresponds to the erasing according to the prior art, in which erasability is smaller such as to be 23 dB. However, as the pulse width Ws is increased, the erasability is improved, particularly in the range of 20 to 40 nS, it exceeds 35 dB. This is considered due to the fact that the area where the auxiliary pulse was irradiated was melted once and then crystallized.

In addition, when the pulse width is further increased to the range of exceeding 40 nS, erasability decreases. This is because the area where the auxiliary pulse was irradiated is further increased in temperature, so that such an area that once melted has the central portion formed the amorphoue state and the peripheral portion formed the crystal state after cooling. As a result, it is considered that the change in reflectance when a signal was reproduced is decreased in amount, and the C/N value of the writing state is decreased. Also, small-sized amorphous mark formed by the auxiliary pulse had a mark pitch of 1 $\mu$m which is near the signal detection limit of a wave length of 780 nm of the reading beam, so that detection was impossible to do for the change of read signal.

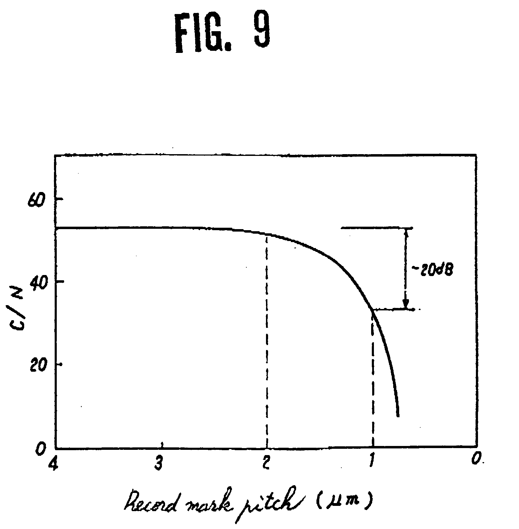

In order to clarify the condition under which either the melt-phase crystal or small-sized amorphous mark formed by the auxiliary pulse gives no effect on the read signal, the relationship between the pitch of recorded marks formed on the optical disk and the read signal was analyzed, which is shown in Fig. 9.

Modulated waveform of the laser beam was identical to that shown in Fig. 3 (a) and the frequency thereof was varied according to the pitch of the recorded marks. Also, the duty factor of the writing pulse was 50% (the pulse width and pulse interval are equal to each other). In case that the mark pitch exceeds 3 $\mu$m, the C/N remains constant, but in case that it becomes below 2 $\mu$m, the C/N is decreased gradually, for example, when it is 1 $\mu$m, the C/N value decreases 20 dB.

However, the optical microscopic observation revealed that in each case, the recorded mark corresponding to a signal to be written was confirmed to be formed.

From the fact that in this case, the wave length of a laser beam was 0.78 $\mu$m, the ratio of the mark pitch and the wave length of the reading beam was about 1.2 times, and it was revealed that if the value of this ratio is either 1.2 or less, its effect on the read signal can be reflected. In general, the spot diameter obtained when a laser beam is condensed up to the resolution limit can be supposed to be proportional to the wave length of the laser beam. Here, supposing that a linear velocity of the optical disk is V, a wave length of a laser beam is L and pulse interval is Ts, the pitch Ds of recorded marks can be expressed as follows:

$$Ds = V/Ts \qquad (1)$$

Also, by applying this expression (1) to the above-mentioned condition (Ds < 1.2 x L), required pulse interval Ts can be expressed as follows:

$$Ts < 1.2 \times L/V \qquad (2)$$

The state obtained from such an auxiliary pulse train as to satisfy this expression (2) (melt crystal or melt crystal accompanying with amorphous one) gives no effect on the recorded mark and increases the erasability only.

Based on the result obtained as above, it becomes possible by arranging an auxiliary pulses between the writing pulses to achieve a writing while almost all area of a track is being melted, thus being capable of overwriting a signal with an improved erasability.

In the above description, the peak power level of the auxiliary pulse is identical to the writing power level Pw. But, when the peak power level is made higher than the Pw, the pulse width may be made smaller to effect the erasability improvement. Inversely, when the peak power level is made smaller than the Pw, the pulse width to be required is widened, but when made further smaller, the recording material can not be heated to the melting point even if the pulse width to be required is widened, which means that the effects of this invention can not be obtained.

Based on the comprehensive results of the above description and consideration upon simplification of the driving circuit of a laser beam, to make the peak power level of the auxiliary pulse identical to the writing power level Pw is advantageous because the power level of the laser beam may be only two. Namely, a single current source can be used in common for producing the writing pulse and auxiliary pulse, pulse of the current source 25 can be used in common.

As another modulation system of a laser beam, by varying the erasing power level Pe, the same experiment as above was carried out. The result was that even when the erasing power level Pe was 0 mW, an erasability of 35 dB or more was obtained under such a condition that the pulse width Ws of the auxiliary pulse ranged from 30 to 40 nS. With the system, only one power level of the laser beam results, which means that the current source 26 for the erasing power can be eliminated, thus the driving circuit of the laser beam being able to be further simplified.

(EXAMPLE 2)

In EXAMPLE 1, modulation of the erasing power was described, but in this EXAMPLE 2, description will be made on a method of further reducing the waveform distortion of a reproduced signal by adding modulation to the writing power.

Waveform distortion is mainly caused by asymmetry of a recorded mark. The phenomenon that the recorded mark becomes asymmetrical is a peculiar one in the heat mode recording. That is, a phase change type recording medium and a optomagnetic recording medium for which the magnetic Kerr effect of a thin ferroelectric film is applied are all such that an absorbed beam is once converted into a heat and a record mark is taken place by the heat thus converted. As a result, if the balance between the heat generation and its diffusion differs due to irradiation time of a beam (pulse width), power or the like, the shape of the recorded mark will be distorted.

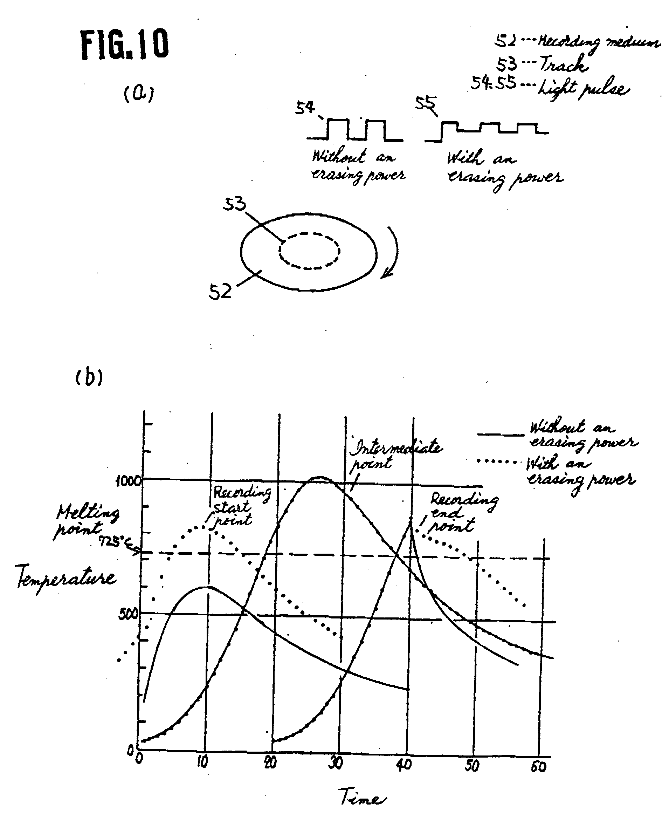

Using a model shown in Fig. 10 (a), dependence of temperature on the time change was determined. In addition, observation of the record mark actually obtained was carried out. Recording medium 52 was structured so as to be generally used in a rewritable type optical disk. GeTe thin film of 90 nm thick whose upper and lower surfaces respectively have ZnS thin films of 100 and 200 nm thick in a sandwich manner was formed on a polycarbonate substrate with a thickness of 2 mm. The same substrate as the above-mentioned one was affixed thereon using an adhesive. The disk thus formed was turned at a linear velocity of 22.5 m/s. Pulse beam 54 (in case there exists no erasing power) or pulse beam 55 (in case there exists the erasing power) was irradiated onto a track 53. The writing power to be used was 10 mW. Also, the pulse width to be irradiated was 88.8 nS. The recording medium moved a small distance of 2 $\mu$m during irradiation of the pulse beam. Fig. 10 (b) shows the calculated result of the temperature change on the center line of the track at each of the beginning point, intermediate point and finishing point of each mark writing.

From this, when the erasing power existed, the following differences were obtained as compared with the case that the erasing power did not exist:

1) Temperature rise at the beginning point of radiation is rapid and reachable temperature is high. As a result, melting is taken place not only where the writing power was irradiated but also at a part of the area before the beginning of irradiation of the erasing power only.

2) Cooling rate at the finishing point of irradiation of the writing power is slow, which means that the melting is held for a longer period of time than other areas.

As a result, in an area behind the finishing point of irradiation, the melting is taken place in a wide area.

3) Provided, at the intermediate point of irradiation of the writing power, almost no difference between the temperature rising and lowering profils thereof results.

As shown above, when the erasing power was added, the recording mark had a shape extended irradiation-wise. If the writing power is decreased in order to solve this problem, the temperature at the central portion will be decreased, so that it is anticipated that the mark width can be reduced.

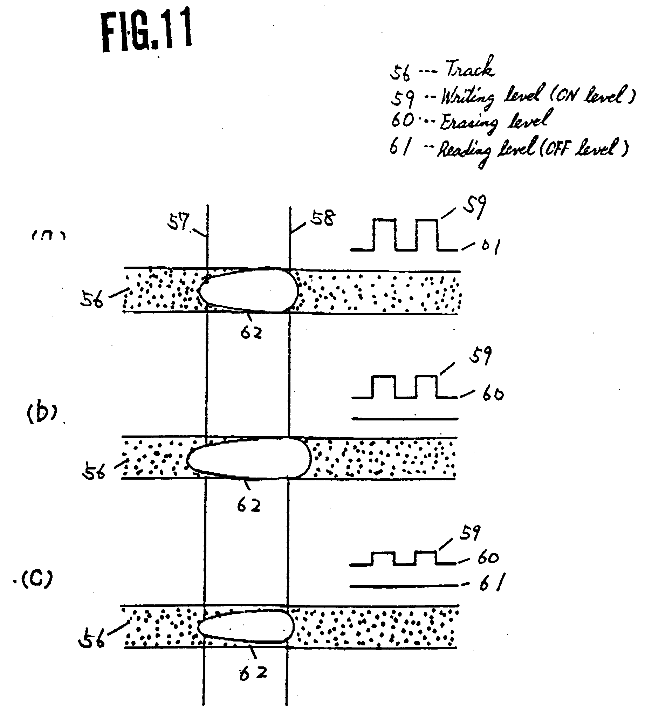

Fig. 11 shows the observations using a transmission electron microscope on the shape of a mark 57 written on a guide track 56 of the optical disk. In this case, to emphasize the shape of the record mark, the boundary between the melt-phase crystal and the solid-phase crystal was omitted. Figs 11 (a), (b) and (c) are the case that the erasing power does not exist, the case that has the same power as the writing power of (a) and yet the erasing power exists, and the case that has the same power as the erasing power of (b) and the writing power is decreased, respectively.

Point 57 indicates the point where the laser beam is changed from an erasing power 60 to a writing power 59, and a point 58 does the point where to be changed from the writing power to the erasing power. When the erasing power was higher than this, the record mark having a shape extended irradiation-wise was formed. Also, when the writing power was lowered, the record mark having a narrow width as a whole was obtained. In addition, in any case of (a), (b) and (c), such a trend that the width of a mark is narrow at the beginning point of writing and wide at the finishing point thereof could be recognized. From the results shown above, it can be said that it is extremely difficult to demodulate a signal written by using a read signal obtained from such a mark as has an error in length and a distortion in shape with no error.

This invention is to solve the above-mentioned problems by subjecting a density change of high frequency further to an optical energy to be modulated according to an information signal.

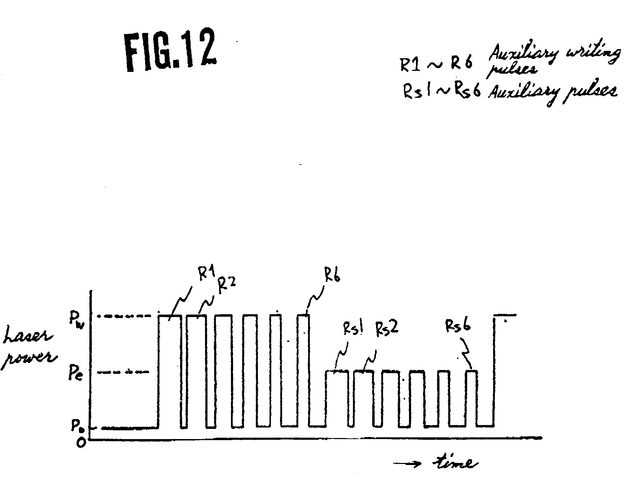

In Fig. 12, an example showing a modified waveform of a beam to be irradiated and its features will be shown below in detail.

1) Laser beam has a pulse modulation between the writing power Pw and the erasing power Pe at a pulse interval $T_3$ corresponding to an information signal to be written.

2) In addition, independently of the information signal, a pulse interval $T_4$ which is suitably smaller than the pulse interval $T_3$ is superimposed thereon. As a result, a beam for forming the record mark is composed of a plurality of auxiliary writing pulses, $R_1$ through $R_6$, which were modulated between the writing power Pw and reading power Po. Also, the beam between one record mark and another recording mark is composed of a plurality of auxiliary pulses, Rs1 through Rs6, which were modulated between the erasing power Pe and reading power Po.

3) The pulse width of the pulse train generated in the period $T_4$ is maximized just after each pulse was switched to the period $T_3$ and then decreased gradually to converge to a specific value. Namely, just after switched from the auxiliary writing pulse train to the auxiliary pulse train or just after switched from the auxiliary pulse train to the auxiliary writing pulse train, the pulse width is the largest. Inversely, just before the above-mentioned switching is carried out, the pulse width is the smallest.

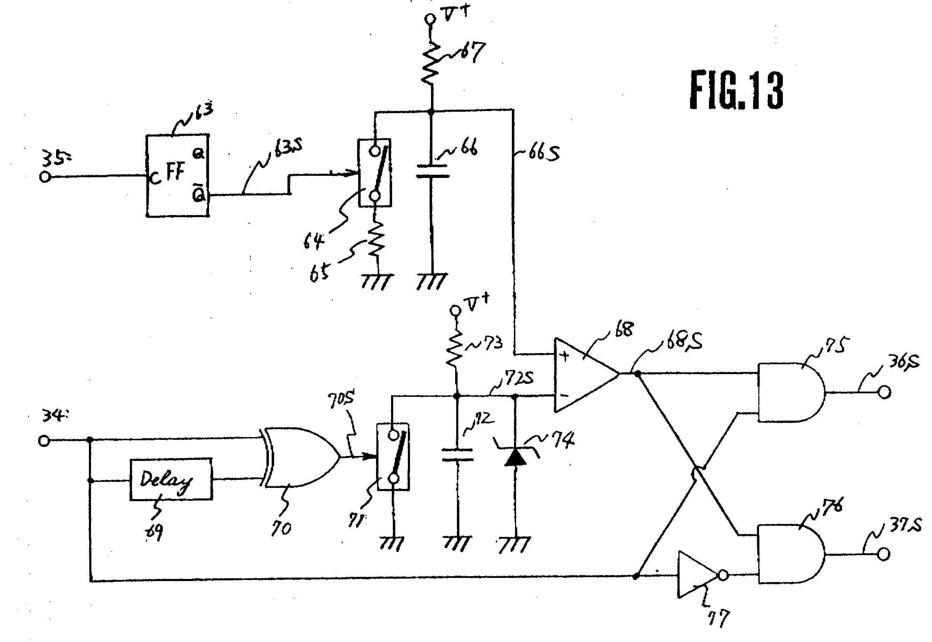

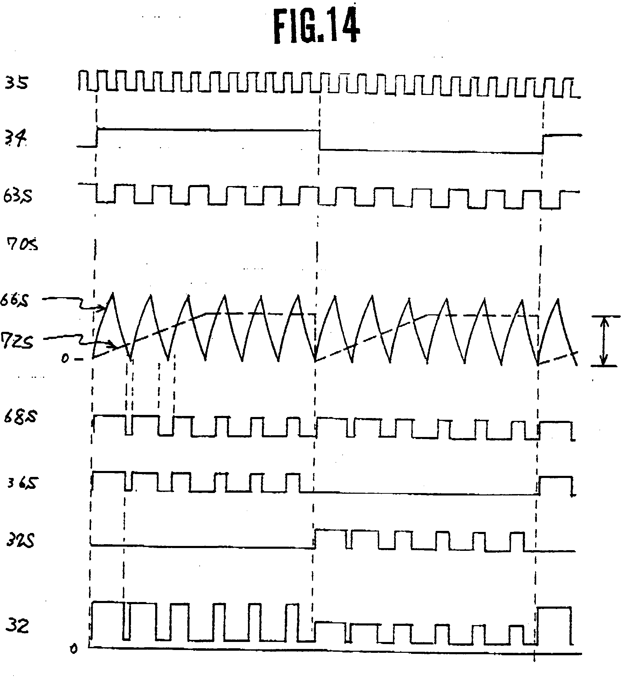

The structure for obtaining the above-mentioned modulated waveform was the same as that in Fig. 1, the details of the writing pulse gate 36 and auxiliary pulse gate 37 were modified. Fig. 13 shows an example of a circuit structure and Fig. 14 is its timing chart. The circuit structure is resemble to that shown in Fig. 5, and pulses having different pulse widths are generated using the difference in charging and discharging characteristic of two capacitors 67 and 73. Clock signal 35 of high order drives a switching circuit 64 through a flip-flop 63. Capacitor 66 is charged by a current passed through a resistor 67 from a power source " + V" and discharged through a discharging resistor 65 when the switching circuit 64 was driven. At this time, a potential signal 66S is inputted into a comparator 68.

On the other hand, code signal 34 is similarly passed through a delay element 69 and an exclusive OR gate 70 to output an edge current 73 3 of the coded signal thereby to drive a switching circuit 71. Capacitor 72 is charged through a resistor 73 having a suitably high resistance as compared with the resistor 67 and a potential 72 S is increased up to the rated voltage of a Zener diode 74, thereafter indicating a constant value. Also, when the switching circuit 71 was driven, it is discharged. The potential signal 72 S of this capacitor 72 is inputted to the comparator 68. From the comparator 68, a signal obtained by comparing the signals thus inputted, 66 S and 72 S, is outputted for inputting to AND gates 75 and 76. In addition, the code signal 34 is inputted to the AND gate 75 or the AND gate 76 through an inverter 77 thereby to output a writing pulse gate signal 36 S and a supplementary gate signal 37 S, respectively.

By this method, the length of a record mark can be accurately determined as shown below. Namely, the rise position and fall position during the writing become possible to be precisely determined.

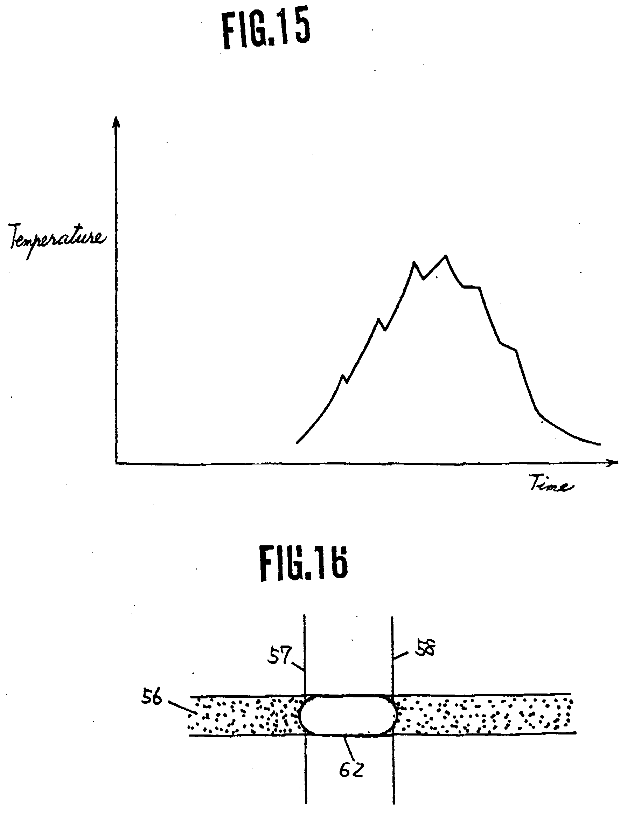

Fig. 15 shows the temperature change when an overwrite was carried out using the modulated waveform shown in Fig. 12. In this case, the structure of the optical disk is identical to that shown in Fig. 10, and the result shown is the temperature change at the finishing point of writing. The period $T_4$ and the power level Pw were set such as to be 1/6 of $T_3$ and two times of the Pe, respectively. Also, the duty of pulse width was 90%, 80%, 70%, 60%, 60% and 60% in the order from a first pulse. The melting time was shortened as compared with the example shown in Fig. 10, so that it is supposed to be difficult to give an effect up to the rear portion of a recording mark. Fig. 16 shows the observation result of the record mark. The shape of a record mark thus obtained was symmetrical at the beginning point and finishing point of writing and its length was of a specified one. Temperature rise could be carried out more smoothly when $T_4$ was at value not exceeding one half of $T_3$. In addition, in order to uniformalize the temperature distribution, it is preferable to make each pulse width wide at the initial stage and then narrow in a gradual manner. Provided, if a long mark is to be recorded, the temperature distribution could be more uniformalized when the pulse width was made constant after irradiation of a constant number of pulses.

(EXAMPLE 3)

The method shown in EXAMPLE 2, in which the pulse width of a writing pulse is changed in order, is a useful method for use in optical recording media of not only the rewriting type but also the write-once type. With an optical recording member of such a write-once type, an asymmetrical record mark in shape as shown in Fig. 11 (a) is formed. However, the area equivalent to this record mark may be, based on the recording material and the recording principle, considered to have various cases such as when the change is made from the amorphous state to the crystal state, when the shape of a recording material is evaporated, or the like. In any case, the same problem must be pointed out in that the record mark width at the beginning point of writing is narrow and that at the finishing point thereof is wide, so that a reproduced waveform will be distorted. In this invention, the beam irradiating condition for forming one record mark is set so that the energy density can be made high at the beginning point of writing and gradually decreased as it moves toward the finishing point thereof.

The modulated waveform in this case can be obtained by omitting parts relating the writing pulses of circuits shown in EXAMPLE 2, for example, the current sources 25 and 26.

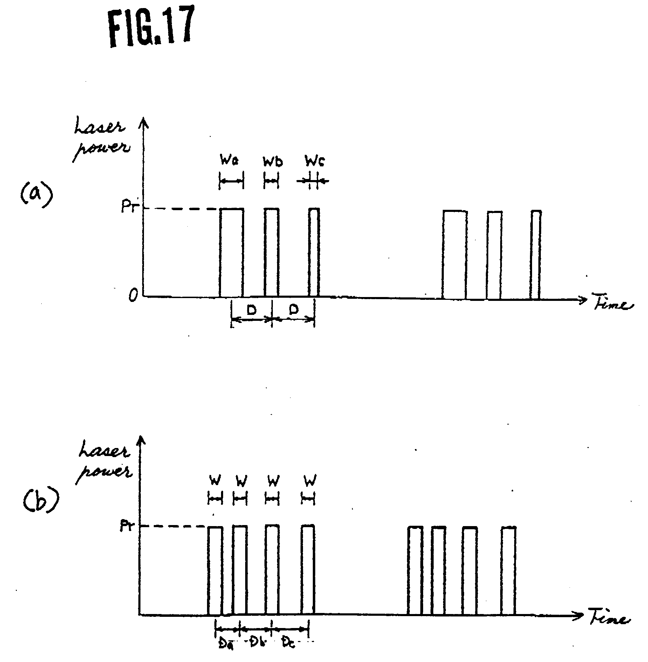

Fig. 17 shows waveforms written on a medium of the write-once type. In Fig. 17 (a), setting is made so that a plurality of pulses are prepared with respect to one piece of record mark and further a pulse width of these pulses becomes wide at the beginning point of writing and narrow at the finishing point thereof. Here, an optical disk which was made of a polycarbonate substrate 2 and a Te-0-Pd system recording layer 3 was used and the writing was carried out under conditions such as to be rotated at a linear velocity of 3 m/S and irradiated at a frequency of 833 kHz for the comparison purpose of this invention with the prior art. Evaluation of the shape of a record mark was achieved by measuring the spectrum strength of a reproduced signal using a spectrum analyzer. Value of a secondary harmonic distortion (SHD) which is expressed by a ratio of the strength A of a writing signal component (833 KHz) and the strength B of the second high-frequency (1.66 MHz) component was used as a standard.

$$SHD = 20 \log (A/B)$$

In addition, it is indicated that as this value increases, distortion of a reproduced signal becomes small, and that the shape of a record mark becomes symmetrical.

When recorded using a waveform according to the prior art, the optimum peak power was 4.5 mW and the SHD value was 25 dB. On the other hand, when the modulated waveform as shown in Fig. 17 (a) was used under conditions such that the peak power was 8 mW, each pulse space was 300 nS and pulse widths of each pulse, Wa, Wb and Wc, were 180 nS, 150 nS and 140 nS, respectively, the SHD value was 38 dB, which means that the SHD value was increased by 13 dB as compared with the method of the prior art and the record mark is improved in symmetry. By increasing the number of pulses and selecting their pulse width, the SHD value can be further improved.

As another method, modulated waveform as shown in Fig. 17 (b) is available. Contrary to the case shown in Fig. 17 (a) in which the optical energy is concentrated upon the beginning point of writing of a record mark by changing the pulse width of each pulse, in Fig. 12 (b) the pulse width of one pulse and the peak power are held constant and the pulse interval is subjected to modulation. Namely, by setting the pulse interval Da at the beginning point of writing so as to be smaller than successive pulse intervals Db and Dc, the optical energy is concentrated upon the head portion of a record mark.

Using this method, writing was carried out in the same manner as above. In this case, the writing conditions were such that the peak power was 8 mW, the pulse width was 120 nS and pulse spaces Da, Db and Dc were 150 nS, 200 nS and 250 nS, respectively. The SHD value obtained was 36 dB, being effective to improve the symmetry of the recording mark.

Other than the above-mentioned method, as the method for concentrating the optical energy upon the beginning portion of a record mark, such a method that the pulse interval and pulse width of a plurality of pulses are held constant and the pulse power at the beginning point of writing is set so as to be higher than that of successive pulses is available. In this case, symmetry of a recording mark can be improved.

With the method of this invention, the following effect are obtainable:

a) Erasability ratio can be improved, that is, overwrite with less effects of a previous recording signal is possible when information is to be rewritten; and

b) Symmetry of a record mark can be improved, that is, writing with less distortion of a read signal is possible.

Thus, a recording method of an optical information recording medium adapted to be used in performing high density signal recording can be obtained.

## Claims

1. A method of recording an information signal by using a single light beam on a recording medium which is reversibly changeable between first and second states which are optically distinguishable from each other, said method having a step of applying the light beam, as a recording light pulse, in response to the information signal to the recording medium for a predetermined duration to cause the recording medium to melt and become the first state thereby forming a record mark,

characterized by modifying the light beam before and after the recording light pulse into a train of auxiliary light pulses each having a shorter duration than the predetermined duration and applying the train of auxiliary pulses to an area of the recording medium before and after the record mark to cause the area to melt and become a state substantially identical to the second state.

**2.** A method as claimed in claim 1, wherein the first state is an amorphous state and the second state is a crystalline state.

**3.** A method as claimed in claim 1, substantially satisfying the following condition:

Ts < 1.2 x L/V

where Ts is an interval of the auxiliary light pulses, L is a wavelength of a reading light beam used for reading the information signal recorded on the recording medium, and V is a relative speed between the recording medium and the reading light beam.

**4.** A method as claimed in claim 1, wherein a peak power level of each of the auxiliary light pulses is equal to a peak power level of the recording light pulse.

**5.** A method as claimed in claim 1, wherein the recording light pulse consists of a train of a plurality of auxiliary recording light pulses.

**6.** A method as claimed in claim 5, wherein a first occurring auxiliary light pulse has the longest duration and a last occurring auxiliary light pulse the shortest duration in the train of the auxiliary light pulses.

**7.** A method as claimed in claim 5, wherein the auxiliary light pulses have pulse durations gradually reduced in the train of the auxiliary light pulses.

**8.** A method as claimed in claim 5, wherein the auxiliary light pulses have pulse durations gradually reduced until reach a predetermined constant value and thereafter maintain the predetermined constant value in the train of the auxiliary light pulses.

**9.** A method as claimed in claim 5, wherein a first occurring auxiliary recording light pulse has the largest duration and a last occurring auxiliary recording light pulse has the shortest duration in the train of the plurality of auxiliary recording light pulses.

**10.** A method as claimed in claim 5, wherein the plurality of auxiliary recording light pulses have pulse durations gradually reduced in the train of the plurality of auxiliary recording light pulses.

**11.** A method as claimed in claim 5, wherein the plurality of auxiliary recording light pulses have pulse duration gradually reduced until reach a predetermined constant value and thereafter maintain the predetermined constant value in the train of the plurality of auxiliary recording light pulses.

**12.** A method as claimed in claim 5, wherein the train of the auxiliary light pulses is the same in frequency as and smaller in peak power level than the train of the plurality of auxiliary recording light pulses.

**13.** A method of recording an information signal by using a single light beam on a recording medium which is reversibly changeable between two states which are optically distinguishable from each other, said method having a step of applying the light beam, as a recording light pulse, in response to the information signal to the recording medium for a predetermined duration to cause the recording medium to melt and cause a state change from one of the two states to the other thereby forming a record mark,
characterized by modulating the recording light pulse into a plurality of light pulses so as to have a higher energy at the beginning of the predetermined duration than an energy at the ending of the predetermined duration thereby causing the recording medium to melt uniformly at an area applied with the recording light pulse and cause the state change from one of the two states to the other to form said area into a record mark having substantially a symmetrical shape.

**14.** A method as claimed in claim 13, wherein the recording light pulse consists of a train of a plurality of light pulses whose pulse widths reduce gradually from the beginning to the ending of the predetermined duration.

**15.** A method as claimed in claim 14, substantially satisfying the following condition:

Ts < 1.2 x L/V

where Ts is an interval of the plurality of light pulses, L is a wavelength of a reading light beam used for reading the information signal recorded on the recording medium, and V is a relative speed between the recording medium and the reading light beam.

**16.** A method as claimed in claim 14, wherein the plurality of light pulses have a same pulse interval.

17. A method as claimed in claim 14, wherein the plurality of light pulses have a same peak power level.

18. A method as claimed in claim 13, wherein the recording light pulse consists of a train of a plurality of light pulses whose pulse intervals increase gradually from the beginning to the ending of the predetermined duration.

19. A method as claimed in claim 18, wherein the plurality of light pulses have a same pulse width.

20. A method as claimed in claim 18, wherein the plurality of light pulses have a same peak power level.

21. A method as claimed in claim 13, wherein the recording light pulse consists of a train of a plurality of light pulses whose peak power levels decrease gradually from the beginning to the ending of the predetermined duration.

**Patentansprüche**

1. Verfahren zum Aufzeichnen eines Informationssignals unter Benutzung eines Einzellichtstrahls, an einem reversibel zwischen ersten und zweiten voneinander optisch unterscheidbaren Zuständen veränderbaren Aufzeichnungsmedium, welches Verfahren einen Schritt besitzt, daß der Lichtstrahl als ein Aufzeichnungs-Lichtimpuls in Abhängigkeit von dem Informationssignal während einer vorbestimmten Zeitlänge an das Aufzeichnungsmedium angelegt wird, um das Aufzeichnungsmedium aufschmelzen in den ersten Zustand kommen zu lassen und dadurch eine Aufzeichnungs-Markierung zu bilden,
dadurch gekennzeichnet, daß der Lichtstrahl vor und nach dem Aufzeichnungs-Lichtimpuls zu einer Folge von Hilfs-Lichtimpulsen mit jeweils einer kürzeren als der vorbestimmten Zeitlänge modifiziert und die Folge von Hilfsimpulsen auf einen Bereich des Aufzeichnungsmediums vor und nach der Aufzeichnungs-Markierung angelegt wird, um den Bereich schmelzen und in einen Zustand kommen zu lassen, der im wesentlichen identisch mit dem zweiten Zustand ist.

2. Verfahren nach Anspruch 1, bei dem der erste Zustand ein amorpher Zustand und der zweite Zustand ein kristalliner Zustand ist.

3. Verfahren nach Anspruch 1, das im wesentlichen die folgende Bedingung erfüllt:

$$Ts < 1{,}2 \times L/V,$$

wobei Ts eine Zeitdauer der Hilfs-Lichtimpulse, L eine Wellenlänge des zum Lesen des auf dem Aufzeichnungsmedium aufgezeichneten Informationssignals benutzten Leselichtstrahls und V eine Relativ-Geschwindigkeit zwischen dem Aufzeichnungsmedium und dem Lese-Lichtstrahl ist.

4. Verfahren nach Anspruch 1, bei dem ein Spitzen-Leistungspegel jedes Hilfs-Lichtimpulses gleich einem Spitzen-Leistungspegel des Aufzeichnungs-Lichtimpulses ist.

5. Verfahren nach Anspruch 1, bei dem der Aufzeichnungs-Lichtimpuls aus einer Folge einer Vielzahl von Hilfs-Aufzeichnungs-Lichtimpulsen besteht.

6. Verfahren nach Anspruch 5, bei dem ein als erster auftretender Hilfs-Lichtimpuls die längste Zeitdauer und ein zuletzt auftretender Hilfs-Lichtimpuls die kürzeste Zeitdauer in der Folge der Hilfs-Lichtimpulse besitzt.

7. Verfahren nach Anspruch 5, bei dem die Hilfs-Lichtimpulse Impuls-Zeitdauern besitzen, die in der Folge von Hilfs-Lichtimpulsen graduell verringert werden.

8. Verfahren nach Anspruch 5, bei dem die Hilfs-Lichtimpulse Impuls-Zeitdauern besitzen, die graduell verringert werden, bis sie einen vorbestimmten konstanten Wert erreichen und danach den vorbestimmten konstanten Wert in der Folge der Hilfs-Lichtimpulse aufrechterhalten.

9. Verfahren nach Anspruch 5, bei dem ein zuerst auftretender Hilfs-Aufzeichnungslichtimpuls die längste Zeitdauer und ein zuletzt auftretender Hilfs-Aufzeichnungslichtimpuls die kürzeste Zeitdauer in der Folge der Vielzahl von Hilfs-Aufzeichnungslichtimpulsen besitzt.

10. Verfahren nach Anspruch 5, bei dem die Vielzahl von Hilfs-Aufzeichnungslichtimpulsen Impuls-Zeitdauern besitzt, die in der Folge der Vielzahl von Hilfs-Aufzeichnungslichtimpulsen graduell reduziert sind.

11. Verfahren nach Anspruch 5, bei dem die Vielzahl von Hilfs-Aufzeichnungslichtimpulsen Impuls-Zeitdauern besitzt, die graduell reduziert werden, bis sie einen vorbestimmten konstanten Wert erreichen und danach der vorbestimmte konstante Wert in der Folge der Vielzahl von Hilfs-Aufzeichnungslichtimpulsen aufrecht erhalten wird.

12. Verfahren nach Anspruch 5, bei dem die Folge von Hilfs-Lichtimpulsen die gleiche Frequenz wie und geringeren Spitzen-Leistungspegel besitzt als die Folge der Vielzahl von Hilfs-Aufzeichnungslichtimpulsen.

13. Verfahren zum Aufzeichnen eines Informationssignals unter Benutzung eines Einzellichtstrahls auf einem reversibel zwischen zwei optisch voneinander unterscheidbaren Zuständen änderbaren Aufzeichnungsmedium, wobei das Verfahren einen Schritt besitzt, daß ein Lichtstrahl als ein Aufzeichnungs-Lichtimpuls in Abhängigkeit von einem Informationssignal während einer vorbestimmten Zeitdauer an das Aufzeichnungsmedium angelegt wird, um das Aufzeichnungsmedium schmelzen zu lassen und eine Zustandsänderung von einem der beiden Zustände zu dem anderen zu verursachen, die eine Aufzeichnungs-Markierung bildet,
dadurch gekennzeichnet, daß der Aufzeichnungs-Lichtimpuls zu einer Vielzahl von Lichtimpulsen moduliert wird, die an dem Beginn der vorbestimmten Zeitdauer eine höhere Energie besitzen, als die Energie am Ende der vorbestimmten Zeitdauer ist, und dadurch das Aufzeichnungsmedium gleichmäßig in einem mit den Aufzeichnungs-Lichtimpulsen beaufschlagten Bereich schmelzen lassen und die Zustandsänderung von einem der beiden Zustände in den anderen zu verursachen zur Ausbildung des Bereiches zu einer Aufzeichnungs-Markierung mit einer im wesentlichen symmetrischen Form.

14. Verfahren nach Anspruch 13, bei dem der Aufzeichnungs-Lichtimpuls aus einer Folge einer Vielzahl von Lichtimpulsen besteht, deren Impulsdauer sich allmählich von dem Beginn zum Ende der vorbestimmten Zeitdauer verringert.

15. Verfahren nach Anspruch 14, das im wesentlichen die folgende Bedingung erfüllt:

$$Ts < 1{,}2 \times L/V,$$

wobei Ts eine Zeitdauer der Vielzahl von Lichtimpulsen, L eine Wellenlänge eines zum Lesen des auf dem Aufzeichnungsmedium aufgezeichneten Informationssignals benutzten Leselichtstrahls und V eine Relativ-Geschwindigkeit des Leselichtstrahls zu dem Aufzeichnungsmedium ist.

16. Verfahren nach Anspruch 14, bei dem Vielzahl von Lichtimpulsen eine gleiche Impuls-Zeitdauer besitzt.

17. Verfahren nach Anspruch 14, bei dem die Vielzahl von Lichtimpulsen den gleichen Spitzen-Leistungspegel besitzt.

18. Verfahren nach Anspruch 13, bei dem der Aufzeichnungs-Lichtimpuls aus einer Folge von einer Vielzahl von Lichtimpulsen besteht, deren Impulsdauern allmählich von dem Beginn zum Ende der vorbestimmten Zeitdauer anwachsen.

19. Verfahren anch Anspruch 18, bei dem die Vielzahl von Lichtimpulsen die gleiche Impulsdauer besitzt.

20. Verfahren nach Anspruch 18, bei dem die Vielzahl von Lichtimpulsen den gleichen Spitzen-Leistungspegel besitzt.

21. Verfahren nach Anspruch 13, bei dem der Aufzeichnungs-Lichtimpuls aus einer Folge einer Vielzahl von Lichtimpulsen besteht, deren Spitzen-Leistungspegel graduell vom Beginn zum Ende der vorbestimmten Zeitdauer abnehmen.

**Revendications**

1. Procédé d'enregistrement d'un signal d'informations par utilisation d'un unique faisceau de lumière sur un support d'enregistrement qui peut changer de manière réversible entre des premier et deuxième états qui sont optiquement distinguables l'un de l'autre, ledit procédé ayant une étape consistant à appliquer le faisceau de lumière comme impulsion de lumière d'enregistrement, en réponse au signal d'informations, au support d'enregistrement pendant une durée prédéterminée pour amener le support d'enregistrement à fondre et devenir le premier état, en formant ainsi une marque d'enregistrement,
caractérisé par la modification du faisceau de lumière avant et après l'impulsion de lumière d'enregistrement en un train d'impulsions auxiliaires de lumière ayant chacune une durée plus courte que la durée prédéterminée et l'application du train d'impulsions auxiliaires à une zone du support d'enregistrement avant et après la marque d'enregistrement pour amener la zone à fondre et devenir un état sensiblement identique au deuxième état.

**2.** Procédé selon la revendication 1, dans lequel le premier état est un état amorphe et le deuxième état est un état cristallin.

**3.** Procédé selon la revendication 1, satisfaisant sensiblement à la condition :

Ts < 1,2 * L/V,

où Ts est un intervalle des impulsions auxiliaires de lumière, L est la longueur d'onde d'un faisceau de lumière de lecture utilisé pour lire le signal d'informations enregistré sur le support d'enregistrement, et V est la vitesse relative entre le support d'enregistrement et le faisceau de lumière de lecture.

**4.** Procédé selon la revendication 1, dans lequel un niveau de puissance de crête de chacune des impulsions auxiliaires de lumière est égal à un niveau de puissance de crête de l'impulsion de lumière d'enregistrement.

**5.** Procédé selon la revendication 1, dans lequel l'impulsion de lumière d'enregistrement est composée d'un train d'une pluralité d'impulsions auxiliaires de lumière d'enregistrement.

**6.** Procédé selon la revendication 5, dans lequel une impulsion auxiliaire de lumière se produisant la première a la durée la plus longue, et une impulsion auxiliaire de lumière se produisant la dernière a la durée la plus courte dans le train d'impulsions auxiliaires de lumière.

**7.** Procédé selon la revendication 5, dans lequel les impulsions auxiliaires de lumière ont des durées d'impulsion progressivement réduites dansle train d'impulsions auxiliaires de lumière.

**8.** Procédé selon la revendication 5, dans lequel les impulsions auxiliaires de lumière ont des durées d'impulsion progressivement réduites jusqu'à atteindre une valeur constante prédéterminée et, après cela, conservent la valeur constante prédéterminée dans le train des impulsions auxiliaires de lumière.

**9.** Procédé selon la revendication 5, dans lequel une impulsion auxiliaire de lumière d'enregistrement se produisant la première a la plus longue durée, et une impulsion auxiliaire de lumière d'enregistrement se produisant la dernière a la plus courte durée dans le train de la pluralité d'impulsions auxiliaires de lumière d'enregistrement.

**10.** Procédé selon la revendication 5, dans lequel les impulsions de la pluralité d'impulsions auxiliaires de lumière d'enregistrement ont des durées d'impulsion progressivement réduites dans le train de la pluralité d'impulsions auxiliaires de lumière d'enregistrement.

**11.** Procédé selon la revendication 5, dans lequel les impulsions de la pluralité d'impulsions auxiliaires de lumière d'enregistrement ont une durée d'impulsion progressivement réduite jusqu'à une valeur constante prédéterminée et, après cela, conservent la valeur constante prédéterminée dans le train de la pluralité d'impulsions auxiliaires de lumière d'enregistrement.

**12.** Procédé selon la revendication 5, dans lequel le train d'impulsions auxiliaires de lumière est le même en fréquence et inférieur en niveau de puissance de crête que le train de la pluralité d'impulsions auxiliaire de lumière d'enregistrement.

**13.** Procédé d'enregistrement d'un signal d'informations par utilisation d'un unique faisceau de lumière sur un support d'enregistrement qui peut changer de manière réversible entre deux états qui sont optiquement distinguables l'un de l'autre, ledit procédé ayant une étape consistant à appliquer le faisceau de lumière comme impulsion de lumière d'enregistrement, en réponse au signal d'informations, au support d'enregistrement pendant une durée prédéterminée pour amener le support d'enregistrement à fondre et provoquer un changement d'état d'un état parmi deux états à l'autre, en formant ainsi une marque d'enregistrement,
    caractérisé par la modulation de l'impulsion de lumière d'enregistrement en une pluralité d'impulsions de lumière de manière à avoir une énergie plus grande au début de la durée prédéterminée que l'énergie à la fin de la durée prédéterminée, en amenant ainsi le support d'enregistrement à fondre uniformément dans une zone recevant l'impulsion de lumière d'enregistrement, et en amenant l'état à changer d'un des deux états à l'autre pour convertir ladite zone en une marque d'enregistrement ayant sensiblement une forme symétrique.

**14.** Procédé selon la revendication 13, dans lequel l'impulsion de lumière d'enregistrement est composée d'un train d'une pluralité d'impulsions de lumière dont les largeurs d'impulsion diminuent progressivement du début à la fin de la durée prédéterminée.

**15.** Procédé selon la revendication 14, satisfaisant sensiblement à la condition suivante :

Ts < 1,2 * L/V,

où Ts est un intervalle de la pluralité d'impulsions de lumière, L est la longueur d'onde du faisceau de lumière de lecture utilisé pour lire le signal d'informations enregistré sur le support d'enregistrement, et V est la vitesse relative entre le support d'enregistrement et le faisceau de lumière de lecture.

**16.** Procédé selon la revendication 14, dans lequel les impulsions de la pluralité d'impulsions de lumière ont le même intervalle d'impulsions.

**17.** Procédé selon la revendication 14, dans lequel les impulsions de la pluralité d'impulsions de lumière ont le même niveau de puissance de crête.

**18.** Procédé selon la revendication 13, dans lequel l'impulsion de lumière d'enregistrement est composée d'un train d'une pluralité d'impulsions de lumière dont les intervalles d'impulsions augmentent progressivement du début à la fin de la durée prédéterminée.

**19.** Procédé selon la revendication 18, dans lequel les impulsions de la pluralité d'impulsions de lumière ont la même largeur d'impulsion.

**20.** Procédé selon la revendication 18, dans lequel les impulsions de la pluralité d'impulsions de lumière ont le même niveau de puissance de crête.

**21.** Procédé selon la revendication 13, dans lequel l'impulsion de lumière d'enregistrement est composée d'un train d'une pluralité d'impulsions de lumière dont les niveaux de puissance de crête diminuent progressivement du début à la fin de la durée prédéterminée.

EP 0 335 486 B1

# FIG. 1

(a) Input signal

(b) Laser output

(c) Temperature

(d) Recorded state

15

EP 0 335 486 B1

# FIG. 2

*1 Optical disk*

*9 Optical spot*

*3 Recording layer*

*2 Substrate*

*8*

*7 ¼-wavelength plate*

*6 Beam splitter*

*4 Laser*

*data 16*

*Laser driving unit*

*5*

*15*

*10*

*11 Mirror*

*12 Photodetector*

*13 Photodetector*

*Signal reproducing unit*

*14*

16

# FIG. 3

(a) Laser output power

(b) Recorded state

18 Liquid-phase crystal
17 Amorphous mark
19 Solid-phase crystal

(C) Laser output power

(d) Re-recorded state

20 Liquid-phase crystal

# FIG. 4

EP 0 335 486 B1

# FIG. 5

EP 0 335 486 B1

# FIG. 6

# FIG. 7

P1, P2 --- Writing pulse
S1, S2, S3 --- Auxiliary pulse
T1, T2 --- Writing pulse interval
Ts --- Auxiliary pulse interval
Ww --- Writing pulse width
Ws --- Auxiliary pulse width

(a)

(b)

EP 0 335 486 B1

# FIG. 8

# FIG. 9

Record mark pitch ( μm )

# FIG.10

(a)

52 --- Recording medium
53 --- Track
54.55 --- Light pulse

54

Without an
erasing power

55

With an
erasing power

53

52

(b)

Without an
erasing power

······ With an
erasing power

Intermediate
point

Recording
start
point

Recording
end
point

Melting
point 725°C

1000

500

Temperature

0    10   20   30   40   50   60

Time

EP 0 335 486 B1

# FIG.11

56 --- Track
59 -- Writing level (ON level)
60 --- Erasing level
61 -- Reading level (OFF level)

25

# FIG.12

R1 ~ R6 Auxiliary writing pulses
Rs1 ~ Rs6 Auxiliary pulses

# FIG.13

EP 0 335 486 B1

# FIG.14

# FIG.15

# FIG.16

# FIG.17